# EUROPÄISCHE PATENTSCHRIFT

(11) **EP 4 680 877 B1**
(45) Veröffentlichungstag und Bekanntmachung des Hinweises auf die Patenterteilung: **18.11.2026**
(21) Anmeldenummer: 24712453.0
(22) Anmeldetag: 15.03.2024
(51) Int. Cl.: F16K 31/04, F16K 31/05, F16K 31/53

(54) **STELLANTRIEB DER AUTOMATISIERUNGSTECHNIK**
ACTUATOR MECHANISM USED IN THE FIELD OF AUTOMATION TECHNOLOGY
MÉCANISME D'ACTIONNEMENT UTILISÉ DANS LE DOMAINE DE LA TECHNOLOGIE D'AUTOMATISATION

(30) Priorität: 15.03.2023 DE 102023106532
(43) Veröffentlichungstag der Anmeldung: 21.01.2026
(73) Patentinhaber: AUMA Riester GmbH & Co. KG, 79379 Müllheim (DE)
(72) Erfinder: HISS, Marc, 79189 Bad Krozingen (DE); FICHTE, Vladimir, 90451 Nürnberg (DE)
(74) Vertreter: Mertzlufft-Paufler, Cornelius
(86) Internationale Anmeldenummer: PCT/EP2024/056994
(87) Internationale Veröffentlichungsnummer: WO 2024/189209

(56) Entgegenhaltungen:
- EP-A1- 0 383 915
- CN-U- 207 750 563
- US-B2- 8 015 890

## Beschreibung

Die Erfindung betrifft einen Stellantrieb der Automatisierungstechnik. Stellantriebe an sich sind bekannt, wie beispielsweise aus der DE102009054120B4, und werden beispielsweise dazu eingesetzt, Armaturen wie beispielsweise Ventile zu betätigen. In vielen Fällen kommen dabei Elektromotoren zum Einsatz, welche über eine Steuerelektronik angesteuert werden, um Armaturen zu betätigen. Es gibt aber auch Anwendungsfälle, in welchen Armaturen manuell betätigt werden. In allen Fällen besteht die Möglichkeit, dass eine Armatur mit zu viel Kraft bzw. Drehmoment gegen eine Endposition gefahren wird. Beispielsweise bei einer manuellen Betätigung ist eine schlechte Kontrolle über den Krafteinsatz gegeben. Bei einer motorischen Betätigung besteht bei gewissen Betriebsbedingungen oder fehlerhafter Drehmomentabschaltung die Möglichkeit des Entstehens von Drehmomentüberhöhungen. Es besteht somit die Gefahr, dass Armaturen beschädigt werden.

Aus der US 8 015 890 B2 ist linearer Stellantrieb bekannt, der sich dadurch auszeichnet, dass die Überlastkupplung in Verbindung mit einer ersten Stufe oder einer der ersten Stufen im Untersetzungsgetriebe angeordnet ist, wodurch die Überlastkupplung nicht so großen Momentenbelastungen ausgesetzt ist, wodurch sie kompakter und zuverlässiger gestaltet werden kann. Durch die geringerer Momentenbelastung kann auch die Geschwindigkeit des Antriebs gegenüber der bekannten Konstruktion erhöht werden, indem Spindeln mit größeren Steigungen gewählt werden.

Aus der CN 207 750 563 U ist eine Motorvorrichtung zum Antrieb eines Kugelhahns vorbekannt.

Aus der EP 0 383 915 A1 ist eine Vorrichtung vorbekannt, die zur Steuerung von Stellmechanismen mit einer fortschreitenden Stangenbewegung dieser Mechanismen bestimmt ist und insbesondere auf Elektroantriebe mit einem Reservehandantrieb zur Steuerung von Rohrleitungsarmaturen. Diese Vorrichtung kann am vorteilhaftesten in der chemischen, der erdölverarbeitenden Industrie, in der Gas-, Zellstoff- und Papierindustrie, in Kernkraftwerken, in der Eisen- und Nichteisenmetallurgie und in anderen Industriezweigen zum Einsatz kommen.

Aufgabe der Erfindung ist es daher, einen Stellantrieb vorzuschlagen, welcher eine sichere Betätigung einer Armatur ermöglicht.

Die Aufgabe wird gelöst durch einen Stellantrieb gemäß dem unabhängigen Anspruch **1.**

Ein erfindungsgemäßer Stellantrieb der Automatisierungstechnik umfasst
einen Handantrieb mit einer Handantriebswelle und/oder einen Elektromotor mit einer Motorantriebswelle;
einen Abtrieb mit einer Abtriebswelle eingerichtet zum Einstellen und/oder Betätigen einer Armatur;
wobei eine Übertragung eines Drehmoments von der Handantriebswelle und/oder der Motorantriebswelle zur Abtriebswelle durch ein Getriebe des Stellantriebs vermittelt wird,
wobei das Getriebe mehrere Verzahnungsteile wie beispielsweise Zahnräder oder Schnecken sowie den Verzahnungsteilen zugeordnete Verzahnungsteilträger wie beispielsweise Getriebewellen oder Getriebeachsen aufweist,
wobei der Stellantrieb eine Drehmomentbegrenzungsvorrichtung aufweist, welche Drehmomentbegrenzungsvorrichtung dazu eingerichtet ist, eine Obergrenze des von der Handantriebswelle und/oder der Motorantriebswelle übertragbaren Drehmoments zu definieren bzw. einzurichten. wobei die Drehmomentbegrenzungsvorrichtung ausgebildet ist durch:
   zumindest eine Baugruppe umfassend ein Verzahnungsteil mit zugehörigem Verzahnungsteilträger, wobei zwischen Verzahnungsteil und zugehörigem Verzahnungsteilträger jeweils zumindest eine schlüssige Begrenzungsverbindung eingerichtet ist,
   wobei die schlüssige Begrenzungsverbindung jeweils durch Kraftschluss gegeben ist,
   wobei bei Erreichen eines Grenzdrehmoments die schlüssige Verbindung gelöst wird,
   wobei die zumindest eine schlüssige Begrenzungsverbindung auf die Obergrenze des zu übertragenden Drehmoments abgestimmt ist,
   wobei bei mindestens einer Baugruppe der zumindest einen Baugruppe der Kraftschluss zwischen Verzahnungsteil und Verzahnungsteilträger durch mindestens ein Zwischenelement vermittelt wird,
   wobei jedes Zwischenelement mit dem Verzahnungsteil und dem Verzahnungsteilträger in Kontakt ist und ringförmig ausgebildet ist,
   wobei ein Verzahnungsteil jeweils eine Längsachse und eine entlang der Längsachse verlaufende Durchgangsbohrung aufweist, welche Durchgangsbohrung eine innere Mantelfläche des Verzahnungsteils definiert, wobei die innere Mantelfläche eines zugehörigen Verzahnungsteilträgers umgreift,
   wobei bei mindestens einer der Baugruppen die innere Mantelfläche eines Verzahnungsteils von einer Außenfläche eines zugehörigen Verzahnungsteilträgers beabstandet ist, wobei das mindestens eine ringförmige Zwischenelement zwischen Außenfläche und innerer Mantelfläche angeordnet und jeweils mit der inneren Mantelfläche sowie mit der Außenfläche in Kontakt ist,
   wobei die Begrenzungsverbindung zwischen dem Zwischenelement und der inneren Mantelfläche oder zwischen dem Zwischenelement und der Außenfläche bewirkt wird.

Die Abstimmung der schlüssigen Begrenzungsverbindung kann beispielsweise durch geeignete Wahl von Materialparametern wie beispielsweise Haftreibungskoeffizient durchgeführt werden. Zwischenelemente haben den Vorteil, dass sie beispielsweise kostengünstig als Standardbauteile bezogen werden können.

Auf diese Weise kann verhindert werden, dass auf eine Armatur übertragene Kräfte und Drehmomente zu einer Beeinträchtigung der Armatur führen. Dies ist insbesondere bei kleinen und/oder fragilen Armaturen, also beispielsweise bei eingesetzten Flanschbauarten F07 oder F05 oder F03 von Vorteil. Beispielsweise bei kleinen Flanschgrößen von Dreh- und Schwenkantrieben gemäß der Normen ISO 5210 08/2017 bzw. ISO5211 08/2017 sind Werte für maximale Abtriebsdrehmomente am Stellantrieb teilweise deutlich kleiner als 40 Nm. Somit besteht bei einem Handantrieb die Gefahr der Überschreitung dieser Werte und damit der Beschädigung der Armatur.

Das Einstellen einer Armatur kann beispielsweise ein Schließen oder Öffnen beispielsweise eines Ventils oder Schiebers umfassen, oder ein Anfahren einer Zwischenposition.

In einer Ausgestaltung weist mindestens eine der Baugruppen eine Mehrzahl von Zwischenelementen auf.

Beispielsweise kann dann durch Wahl einer Anzahl der eingesetzten Zwischenelemente eine Obergrenze des von der Handantriebswelle und/oder der Motorantriebswelle übertragbaren Drehmoments definiert werden.

In einer Ausgestaltung sind zumindest zwei Baugruppen mit jeweils verschiedenen Verzahnungsteilträgern eingerichtet.

Auf diese Weise hat man eine redundante Einrichtung einer Drehmomentobergrenze. Wenn beispielsweise bei einer der Baugruppen eine schlüssige Begrenzungsverbindung beispielsweise durch Festrosten versagt, ist eine Drehmomentobergrenze durch eine weitere der Baugruppen sichergestellt.

In einer Ausgestaltung ist mindestens eine Baugruppe der zumindest einen Baugruppe an der Handantriebswelle und/oder der Motorantriebswelle eingerichtet, welche Handantriebwelle bzw. Motorantriebswelle als Verzahnungsteilträger wirkt.

In einer Ausgestaltung ist die Abstimmung der kraftschlüssigen Begrenzungsverbindung durch Einstellung eines Produkts aus Anpressdruck, Anpressfläche und Haftreibungskoeffizient zwischen kontaktierten Materialien einrichtbar.

Der Haftreibungskoeffizient kann auch durch einen Schmierstoff wie beispielsweise Fett oder Öl eingestellt bzw. beeinflusst werden.

In einer Ausgestaltung weist die Handantriebswelle einen Anschluss für ein Handbedienelement auf, wobei das Handbedienelement beispielsweise ein Handrad oder ein Schraubenschlüssel ist.

In einer Ausgestaltung weist der Stellantrieb ein Gehäuse auf,
wobei Antriebswelle, Abtriebswelle sowie Getriebe jeweils zumindest teilweise innerhalb des Gehäuses angeordnet sind.

Im Folgenden wird die Erfindung anhand von Ausführungsbeispielen beschrieben.
- Fig. 1: zeigt einen beispielhaften erfindungsgemäßen Stellantrieb;
- Fig. 2: zeigt eine Explosionsdarstellung einer in Fig. 1 gezeigten Baugruppe;
- Fig. 3: zeigt eine Längsschnittdarstellung einer beispielhaften erfindungsgemäßen Baugruppe.

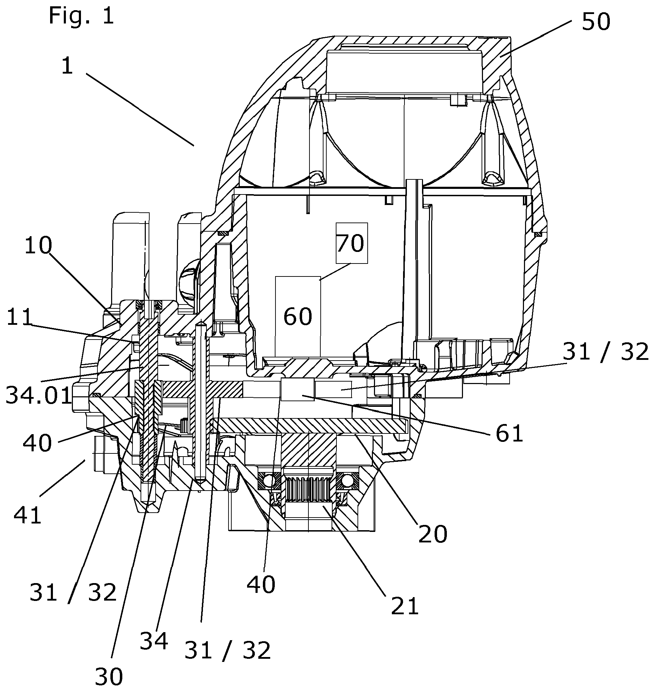

Fig. 1 skizziert auf schematische Weise einen beispielhaften erfindungsgemäßen Stellantrieb 1 umfassend einen Handantrieb 10 mit einer Handantriebswelle 11, einen Abtrieb 20 mit einer Abtriebswelle 21 und ein Getriebe 30, welches mittels Verzahnungsteilen 31 dazu eingerichtet ist, ein Drehmoment von der Handantriebswelle zur Abtriebswelle zu übertragen. Zwecks Bedienung des Handantriebs kann ein Handbedienelement 12, wie beispielsweise ein Handrad oder ein Schraubenschlüssel über einen Anschluss des Handantriebs angeschlossen werden. Der Stellantrieb kann wie hier dargestellt alternativ zum Handantrieb oder zusätzlich einen Elektromotor 60 mit einer Motorantriebswelle 61 aufweisen, welcher mittels des Getriebes 30 oder direkt mit dem Abtrieb verbunden ist, um diesen anzutreiben. Typischerweise ist ein Gehäuse 50 vorgesehen, in welchem Gehäuse Antriebswelle, Abtriebswelle sowie Getriebe jeweils zumindest teilweise angeordnet sind. Die Verzahnungsteile können beispielsweise Zahnräder 32 oder Schnecken sein. Verzahnungsteilträger können wie hier dargestellt Getriebewellen 34.01 oder auch Getriebeachsen sein. Eine elektronische Betriebsschaltung 70 ist dazu eingerichtet, den Elektromotor 70 zu betreiben.

Erfindungsgemäß ist eine Drehmomentbegrenzungsvorrichtung 40 vorgesehen, welche dazu eingerichtet ist, ein vom Handantrieb 10 und/oder Elektromotor 60 über die Motorantriebswelle 61 auf den Abtrieb vermitteltes Drehmoment zu begrenzen. Auf diese Weise können fragile oder sensible Armaturen vor zu hohen Drehmomenten, bzw. aus solchen Drehmomenten entstehende Kräfte geschützt werden. Dies ist insbesondere bei kleinen und/oder fragilen Armaturen, also beispielsweise bei eingesetzten Flanschbauarten F07 oder F05 oder F03 von Vorteil. Beispielsweise bei kleinen Flanschgrößen von Dreh- und Schwenkantrieben gemäß der Normen ISO 5210 08/2017 bzw. ISO5211 08/2017 sind Werte für maximale Abtriebsdrehmomente am Stellantrieb teilweise deutlich kleiner als 40 Nm. Somit besteht bei einem Handantrieb sowie Elektromotor die Gefahr der Überschreitung dieser Werte und damit der Beschädigung der Armatur. Der Elektromotor, sowie Motorantriebwelle 61 können so wie hier gezeigt zur Schnittebene der Grafik versetzt sein.

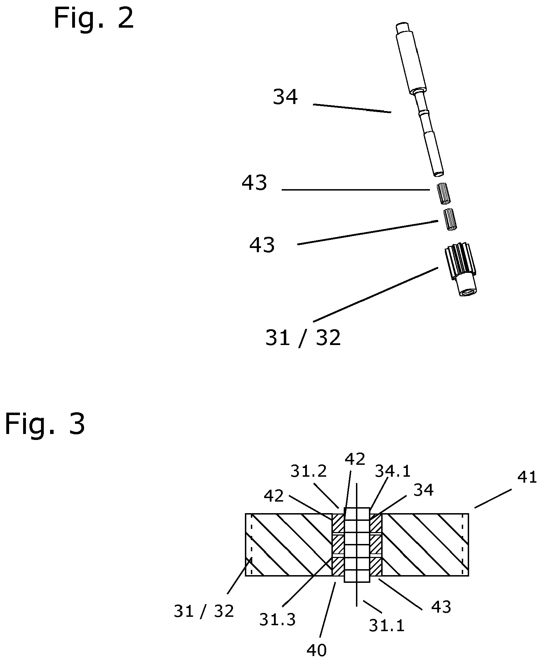

Eine erfindungsgemäße Drehmomentbegrenzungsvorrichtung weist wie hier und in der in Fig. 2 gezeigten beispielhaften Explosionsdarstellung gezeigt eine Baugruppe 41 umfassend ein Verzahnungsteil 31 wie beispielsweise hier ein Zahnrad 32, ein zugehöriges Verzahnungsteilträger 34 auf, wobei zwischen Verzahnungsteil und zugehörigem Verzahnungsteilträger jeweils zumindest eine kraftschlüssige Begrenzungsverbindung 42, hier beispielhaft zwei kraftschlüssige Begrenzungsverbindungen 42 eingerichtet sind. Die Drehmomentbegrenzung resultiert daher, dass bei Überschreiten einer maximalen Haftreibungskraft zwei sich berührende Oberflächen der Begrenzungsverbindung beginnen, gegeneinander zu gleiten. Wie hier gezeigt, ist zwischen einem Verzahnungsteil und einem Verzahnungsteilträger zwecks Einrichtung der kraftschlüssigen Verbindung zumindest ein ringförmiges Zwischenelement 43 angeordnet, hier sind beispielhaft zwei Zwischenelemente 43 angeordnet, welche in einer Presspassung zwischen Verzahnungsteil und Verzahnungsteilträger befindlich sind.

Fig. 3 zeigt einen Längsschnitt durch eine beispielhafte erfindungsgemäße Ausgestaltung einer Baugruppe 41 einer Drehmomentbegrenzungsvorrichtung 40, wobei zwischen dem Verzahnungsteilträger 34 und dem Verzahnungsteil 31 wie hier beispielsweise gezeigt drei Zwischenelemente 43 angeordnet ist, welche bei der Begrenzungsverbindung 42 mitwirken. Das Verzahnungsteil 31, hier beispielsweise ein Zahnrad 32, weist eine Längsachse 31.1 und eine entlang der Längsachse verlaufende Durchgangsbohrung 31.2 auf, welche Durchgangsbohrung eine innere Mantelfläche 31.3 des Verzahnungsteils definiert, wobei die innere Mantelfläche das zugehörige Verzahnungsteilträger 34 mit einer Außenfläche 34.1 umgreift.

Die innere Mantelfläche 31.3 des Verzahnungsteils ist von der Außenfläche 34.1 des zugehörigen Verzahnungsteilträgers 34 beabstandet ist, wobei das mindestens eine ringförmige Zwischenelement 43 zwischen Außenfläche und innerer Mantelfläche angeordnet und jeweils mit der inneren Mantelfläche sowie mit der Außenfläche in Kontakt ist. Die mindestens eine Begrenzungsverbindung 42 kommt zwischen dem Zwischenelement und der inneren Mantelfläche oder zwischen dem Zwischenelement und der Außenfläche zustande.

Die Drehmomentobergrenze kann über Wahl einer maximalen Haftreibung der mindestens einen kraftschlüssigen Begrenzungsverbindung eingestellt werden. Beispielsweise kann bei Verwendung von Zwischenelementen über die Anzahl der Zwischenelemente eine Drehmomentobergrenze eingestellt werden. Mehrere Zwischenelemente, welche zwischen einem Verzahnungselement und einem zugehörigen Verzahnungsteilträger angeordnet sind, wirken parallel. Mit größerer Anzahl erhöht sich die maximale Haftreibungskraft zwischen Verzahnungselement und Verzahnungsteilträger und somit die Drehmomentobergrenze. Bei Bezug von Standardteilen als Zwischenelemente kann kostengünstig und ohne großen Aufwand die Drehmomentgrenze eingestellt werden.

Die in den Figuren 1 bis 3 gezeigten Merkmale sind kombinierbar.

### Bezugszeichenliste

- 1: Stellantrieb
- 10: Handantrieb
- 11: Handantriebswelle
- 12: Handbedienelement
- 20: Abtrieb
- 21: Abtriebswelle
- 30: Getriebe
- 31: Verzahnungsteil
- 31.1: Längsachse
- 31.2: Durchgangsbohrung
- 31.3: innere Mantelfläche
- 32: Zahnrad
- 34: Verzahnungsteilträger
- 34.01: Getriebewelle
- 34.1: Außenfläche
- 40: Drehmomentbegrenzungsvorrichtung
- 41: Baugruppe
- 42: schlüssige Begrenzungsverbindung
- 43: Zwischenelement
- 44: Formelemente
- 45: Umgriffsbereich
- 50: Gehäuse
- 60: Elektromotor
- 61: Motorantriebswelle
- 70: Elektronische Betriebsschaltung

## Patentansprüche

1. Stellantrieb (1) der Automatisierungstechnik umfassend:
einen Handantrieb (10) mit einer Handantriebswelle (11) und/oder einen Elektromotor (60) mit einer Motorantriebswelle (61);
einen Abtrieb (20) mit einer Abtriebswelle (21) eingerichtet zum Einstellen und/oder Betätigen einer Armatur;
wobei eine Übertragung eines Drehmoments bzw. einer Kraft von der Handantriebswelle und/oder der Motorantriebswelle zur Abtriebswelle durch ein Getriebe (30) des Stellantriebs vermittelt wird,
wobei das Getriebe mehrere Verzahnungsteile (31) wie beispielsweise Zahnräder (32) oder Schnecken sowie den Verzahnungsteilen zugeordnete Verzahnungsteilträger (34) wie beispielsweise Getriebewellen (34.01) oder Getriebeachsen aufweist,
wobei der Stellantrieb eine
Drehmomentbegrenzungsvorrichtung (40) aufweist, welche Drehmomentbegrenzungsvorrichtung dazu eingerichtet ist, eine Obergrenze des von der Handantriebswelle und/oder der Motorantriebswelle übertragbaren Drehmoments zu definieren,
wobei die Drehmomentbegrenzungsvorrichtung (40) ausgebildet ist durch:
zumindest eine Baugruppe (41) umfassend ein Verzahnungsteil der mehreren Verzahnungsteile (31) mit zugehörigem Verzahnungsteilträger (34), wobei zwischen Verzahnungsteil und zugehörigem Verzahnungsteilträger jeweils zumindest eine schlüssige Begrenzungsverbindung (42) eingerichtet ist,
wobei die schlüssige Begrenzungsverbindung jeweils durch Kraftschluss gegeben ist,
wobei bei Erreichen eines Grenzdrehmoments die schlüssige Verbindung gelöst wird,
wobei die zumindest eine schlüssige Begrenzungsverbindung auf die Obergrenze des zu übertragenden Drehmoments abgestimmt ist,
wobei bei mindestens einer Baugruppe (41) der zumindest einen Baugruppe der Kraftschluss zwischen Verzahnungsteil (31) und Verzahnungsteilträger (34) durch mindestens ein Zwischenelement (43) vermittelt wird,
wobei jedes Zwischenelement mit dem Verzahnungsteil und Verzahnungsteilträger in Kontakt ist und ringförmig ausgebildet ist,
wobei das Verzahnungsteil (31) jeweils eine Längsachse (31.1) und eine entlang der Längsachse verlaufende Durchgangsbohrung (31.2) aufweist, welche Durchgangsbohrung eine innere Mantelfläche (31.3) des Verzahnungsteils definiert, wobei die innere Mantelfläche ein zugehöriges Verzahnungsteilträger (34) umgreift,
wobei bei mindestens einer der Baugruppen (41) die innere Mantelfläche (31.3) des Verzahnungsteils von einer Außenfläche (34.1) einem zugehörigen Verzahnungsteilträger (34) beabstandet ist,
**dadurch gekennzeichnet, dass**
das mindestens eine ringförmige Zwischenelement (43) zwischen Außenfläche und innerer Mantelfläche angeordnet ist
und jeweils mit der inneren Mantelfläche sowie mit der Außenfläche in Kontakt ist,
wobei die Begrenzungsverbindung (42) zwischen dem Zwischenelement und der inneren Mantelfläche oder zwischen dem Zwischenelement und der Außenfläche bewirkt wird.

2. Stellantrieb nach Anspruch 1,
wobei mindestens eine der Baugruppen (41) eine Mehrzahl von Zwischenelementen (43) aufweist.

3. Stellantrieb nach einem der Ansprüche 1 oder 2,
wobei zumindest zwei Baugruppen (41) mit jeweils verschiedenen Verzahnungsteilträgern (34) eingerichtet sind.

4. Stellantrieb nach einem der vorigen Ansprüche,
wobei mindestens eine Baugruppe (41) der zumindest einen Baugruppe an der Handantriebswelle (11) eingerichtet ist, welche Handantriebwelle als Verzahnungsteilträger (34) wirkt.

5. Stellantrieb nach einem der vorigen Ansprüche,
wobei die Abstimmung der kraftschlüssigen Begrenzungsverbindung (42) durch Einstellung eines Produkts aus Anpressdruck, Anpressfläche und Haftreibungskoeffizient zwischen kontaktierten Materialien einrichtbar ist.

6. Stellantrieb nach einem der vorigen Ansprüche,
wobei die Handantriebswelle (11) einen Anschluss für ein Handbedienelement (12) aufweist, wobei das Handbedienelement beispielsweise ein Handrad oder ein Schraubenschlüssel ist.

7. Stellantrieb nach einem der vorigen Ansprüche,
wobei der Stellantrieb ein Gehäuse (50) aufweist, wobei Antriebswelle (11), Abtriebswelle (21) sowie Getriebe (30) jeweils zumindest teilweise innerhalb des Gehäuses angeordnet sind.

8. Stellantrieb nach einem der vorigen Ansprüche,
wobei der Stellantrieb eine elektronische Betriebsschaltung (70) umfasst, welche elektronische Betriebsschaltung dazu eingerichtet ist, den Elektromotor zu betreiben.

## Claims

1. Actuator (1) of automation technology, comprising:
a manual drive (10) with a manual drive shaft (11) and/or an electric motor (60) with a motor drive shaft (61);
an output (20) with an output shaft (21) configured to adjust and/or actuate a fitting;
wherein a transmission of a torque or a force from the manual drive shaft and/or the motor drive shaft to the output shaft is mediated by a gear mechanism (30) of the actuator,
wherein the gear mechanism has a plurality of toothed parts (31) such as, for example, gear wheels (32) or worms, and toothed part carriers (34) assigned to the toothed parts, such as, for example, gear shafts (34.01) or gear axles,
wherein the actuator has a torque limiting device (40), which torque limiting device is configured to define an upper limit of the torque transmittable by the manual drive shaft and/or the motor drive shaft,
wherein the torque limiting device (40) is formed by:
at least one assembly (41) comprising a toothed part of the plurality of toothed parts (31) with an associated toothed part carrier (34),
wherein in each case at least one frictional limiting connection (42) is configured between the toothed part and the associated toothed part carrier,
wherein the frictional limiting connection is provided in each case by frictional engagement,
wherein upon reaching a limiting torque, the frictional connection is released,
wherein the at least one frictional limiting connection is matched to the upper limit of the torque to be transmitted,
wherein in at least one assembly (41) of the at least one assembly, the frictional engagement between the toothed part (31) and the toothed part carrier (34) is mediated by at least one intermediate element (43),
wherein each intermediate element is in contact with the toothed part and the toothed part carrier and is of annular design,
wherein the toothed part (31) has in each case a longitudinal axis (31.1) and a through-bore (31.2) extending along the longitudinal axis, which through-bore defines an inner lateral surface (31.3) of the toothed part, wherein the inner lateral surface encompasses an associated toothed part carrier (34),
wherein in at least one of the assemblies (41), the inner lateral surface (31.3) of the toothed part is spaced apart from an outer surface (34.1) of an associated toothed part carrier (34),
**characterized in that**
the at least one annular intermediate element (43) is arranged between the outer surface and the inner lateral surface and
is in contact with the inner lateral surface as well as with the outer surface in each case,
wherein the limiting connection (42) is effected between the intermediate element and the inner lateral surface or between the intermediate element and the outer surface.

2. Actuator according to claim 1,
wherein at least one of the assemblies (41) has a plurality of intermediate elements (43).

3. Actuator according to one of claims 1 or 2,
wherein at least two assemblies (41) are configured with respectively different toothed part carriers (34).

4. Actuator according to one of the preceding claims,
wherein at least one assembly (41) of the at least one assembly is arranged on the manual drive shaft (11), which manual drive shaft acts as a toothed part carrier (34).

5. Actuator according to one of the preceding claims,
wherein the tuning of the frictional limiting connection (42) can be established by setting a product of contact pressure, contact area, and coefficient of static friction between contacted materials.

6. Actuator according to one of the preceding claims,
wherein the manual drive shaft (11) has a connection for a manual operating element (12), wherein the manual operating element is, for example, a handwheel or a wrench.

7. Actuator according to one of the preceding claims,
wherein the actuator has a housing (50),
wherein the drive shaft (11), the output shaft (21) and the gear mechanism (30) are each arranged at least partially within the housing.

8. Actuator according to one of the preceding claims,
wherein the actuator comprises an electronic operating circuit (70), which electronic operating circuit is configured to operate the electric motor.

## Revendications

1. Mécanisme d'actionnement (1) dans le domaine de la technologie d'automatisation, comprenant :
un entraînement manuel (10) avec un arbre d'entraînement manuel (11) et/ou un moteur électrique (60) avec un arbre d'entraînement moteur (61) ;
une sortie (20) avec un arbre de sortie (21) ajusté pour régler et/ou actionner une armature ;
dans lequel un transfert d'un couple, respectivement d'une force, est produit par l'arbre d'entraînement manuel et/ou l'arbre d'entraînement moteur vers l'arbre de sortie par l'intermédiaire d'une transmission (30) du mécanisme d'actionnement,
dans lequel la transmission présente plusieurs parties de denture (31), telles que par exemple des roues dentées (32) ou des vis sans fin, ainsi que le support de parties de denture (34) associé aux parties de denture, tels que par exemple des arbres de transmission (34.01) ou des axes de transmission,
dans lequel le mécanisme d'actionnement présente un dispositif de limitation de couple (40), lequel dispositif de limitation de couple est ajusté pour définir une limite supérieure du couple qui peut être transféré par l'arbre d'entraînement manuel et/ou l'arbre d'entraînement moteur,
dans lequel le dispositif de limitation de couple (40) est formé par l'intermédiaire de :
au moins un module (41) comprenant une partie de denture parmi la pluralité de parties de denture (31) avec le support de partie de denture (34) associé, dans lequel entre la partie de denture et le support de partie de denture associé est ajustée à chaque fois au moins une liaison de limitation (42) complémentaire,
dans lequel la liaison de limitation complémentaire est à chaque fois donnée par complémentarité de force,
dans lequel la liaison complémentaire est desserrée lorsqu'un couple de limitation est atteint,
dans lequel l'au moins une liaison de limitation complémentaire est mise au point sur la limite supérieure du couple à transmettre,
dans lequel, dans le cas d'au moins un module (41) parmi l'au moins un module, l'adhérence entre la partie de denture (31) et le support de partie de denture (34) est produite par au moins un élément intermédiaire (43),
dans lequel chaque élément intermédiaire est en contact avec la partie de denture et le support de partie de denture et est formé de manière annulaire,
dans lequel la partie de denture (31) présente à chaque fois un axe longitudinal (31.1) et un trou d'interconnexion (31.2) qui s'étend le long de l'axe longitudinal, lequel trou d'interconnexion définit une surface de revêtement interne (31.3) de la partie de denture, la surface de revêtement interne entourant un support de partie de denture associé (34),
dans lequel, dans le cas d'au moins un des modules (41), le revêtement interne (31.3) de la partie de denture est distant d'une surface extérieure (34.1) du support de partie de denture associé (34),
**caractérisé en ce que** l'au moins un élément intermédiaire annulaire (43) est disposé entre la surface extérieure et le revêtement interne et à chaque fois est en contact avec le revêtement interne ainsi qu'avec la surface extérieure, la liaison de limitation (42) étant produite entre l'élément intermédiaire et le revêtement interne ou entre l'élément intermédiaire et la surface extérieure.

2. Mécanisme d'actionnement selon la revendication 1,
dans lequel au moins un des modules (41) présente une pluralité d'éléments intermédiaires (43).

3. Mécanisme d'actionnement selon l'une des revendications 1 ou 2, dans lequel au moins deux modules (41) sont ajustés avec des supports de partie de denture (34) différents à chaque fois.

4. Mécanisme d'actionnement selon l'une des revendications précédentes,
dans lequel au moins un module (41) parmi l'au moins un module est ajusté sur l'arbre d'entraînement manuel (11), lequel arbre d'entraînement manuel agit comme un support de partie de denture (34).

5. Mécanisme d'actionnement selon l'une des revendications précédentes,
dans lequel la mise au point de la liaison de limitation (42) par complémentarité de force peut être ajustée par le réglage d'un produit par pression de compression, surface de compression et coefficient de frottement statique entre les matériaux en contact.

6. Mécanisme d'actionnement selon l'une des revendications précédentes,
dans lequel l'arbre d'entraînement manuel (11) présente un raccordement pour un élément de commande manuelle (12), dans lequel l'élément de commande manuelle est par exemple un volant ou une clé.

7. Mécanisme d'actionnement selon l'une des revendications précédentes,
dans lequel le mécanisme d'actionnement présente un boîtier (50),
dans lequel l'arbre d'entraînement (11), l'arbre de sortie (21) ainsi que la transmission (30) sont à chaque fois disposés au moins partiellement à l'intérieur du boîtier.

8. Mécanisme d'actionnement selon l'une des revendications précédentes, dans lequel le mécanisme d'actionnement comprend un circuit de fonctionnement électronique (70), lequel circuit de fonctionnement électronique est ajusté pour faire fonctionner le moteur électrique.
